# EUROPEAN PATENT SPECIFICATION

(11) **EP 2 580 743 B1**
(45) Date of publication and mention of the grant of the patent: **08.06.2016**
(21) Application number: 11795005.5
(22) Date of filing: 09.06.2011
(51) Int. Cl.: G06K 7/10, H04B 5/00, G07B 15/06

(54) **MULTI-PROTOCOL ELECTRONIC TOLL COLLECTION SYSTEM**
ELEKTRONISCHES MAUTSYSTEM MT MEHREREN PROTOKOLLEN
SYSTÈME DE PÉAGE AUTOMATIQUE ÉLECTRONIQUE À PROTOCOLES MULTIPLES

(30) Priority: 27.05.2011 US 201113117682; 14.06.2010 US 815077
(43) Date of publication of application: 17.04.2013
(73) Proprietor: Kapsch TrafficCom Canada Inc., Halifax, NS B3J 3R7 (CA)
(72) Inventor: KOHLI, Japjeev, Waterloo, Ontario N2T 2X3 (CA); TURNOCK, Richard, Toronto, Ontario M2N 3S6 (CA)
(74) Representative: Weiser, Andreas
(86) International application number: PCT/CA2011/050351
(87) International publication number: WO 2011/156920

(56) References cited:
- WO-A1-2010/105349
- US-A1- 2003 001 755
- US-A1- 2006 255 968
- US-B2- 7 353 185
- US-B2- 7 590 100

## Description

### TECHNICAL FIELD

The present disclosure relates to electronic toll collection (ETC) systems and in particular to a multi-protocol ETC system and methods of selecting an operating protocol in a multi-protocol ETC system.

### BACKGROUND

ETC systems conduct toll transactions electronically using RF communications between a vehicle-mounted transponder (a "tag") and a stationary toll station transceiver (a "reader").

In some ETC systems, the reader broadcasts a polling or trigger RF signal. A transponder on a vehicle passing through the broadcast area or zone detects the polling or trigger signal and responds with its own RF signal. The transponder responds by sending a response signal containing information stored in memory in the transponder, such as the transponder ID number. The reader receives the response signal and may conduct an electronic toll transaction, such as by debiting a user account associated with the transponder ID number. The reader may then broadcast a programming RF signal to the transponder. The programming signal provides the transponder with updated information for storage in its memory. It may, for example, provide the transponder with a new account balance.

In some ETC systems, the tags are "passive", meaning they rely upon the energy broadcast by the reader and communicate back to the reader using backscatter modulation.

There are a number of pre-defined communication protocols for reader-transponder communications in an ETC system. These include various public TDMA protocols, the State of California Code of Regulation (CAL-TRAN) Title 21 (T21) protocol, and proprietary protocols, such as IAG (northeastern InterAgency Group members NY, NJ, PA, DE). The various protocols operate in different geographical regions.

Comprehensive standards governing the communications between the transponder and reader do not exist. Therefore, interoperability does not exist between the equipment of different manufacturers. Interoperability in this context is the ability of a roadside reading or interrogation device of one manufacturer to meaningfully process the data from any given transponder mounted in a vehicle. Vehicles traverse large geographical areas and a vehicle with one type of protocol transponder will sometimes pass through an ETC system of another protocol type.

It would be advantageous to provide a multi-protocol ETC system and methods of operating same that permits communications with tags using different protocols.
US 2003/0001755 A1 discloses a RF toll collection system.

### BRIEF SUMMARY

The present application describes systems and methods for communicating with a transponder located in or on a moving vehicle travelling in a roadway. The present application provides a multi-protocol ETC system capable of processing various types of transponders. The ETC system utilizes a dynamic protocol selection mechanism to determine which protocol type reader will operate depending on the protocol type of the transponder passing through the ETC station.

Aspects of the invention are disclosed in independent claims 1, 11 and 12.

The present application provides a method for dynamically selecting a communication protocol in a multi-protocol electronic toll collection system, the system including a first reader configured to operate using a first communications protocol and a second reader configured to operate using a second communications protocol, the system further including an antenna configured to define a capture zone in a roadway, wherein the system uses a cyclic protocol having a defined frame duration. The method includes transmitting a signal from the first reader over the antenna using the first communications protocol within a first portion of the defined frame duration; detecting whether a response signal is received by the first reader; and if the response signal is not received within the first portion of the defined frame duration, then disabling transmissions of the first reader, and enabling operation of the second reader, whereby the second reader is configured to use the antenna during a remainder of the defined frame duration when enabled.

The present application describes a multi-protocol electronic toll collection (ETC) system for conducting toll transactions in connection with vehicles traveling in a roadway, wherein the vehicles are equipped with either a first transponder configured to operate in accordance with a first communications protocol or a second transponder configured to operate in accordance with a second communications protocol. The system includes an antenna for transmitting and receiving RF signals and positioned to define a capture zone within the roadway; a first reader coupled to the antenna and configured to communicate using the first communications protocol; and a second reader coupled to the antenna and configured to communicate using the second communications protocol. The system is configured to operate using a cyclic protocol having a defined frame duration. The first reader is configured to broadcast a signal over the antenna within a first portion of the defined frame duration, and to detect whether a response signal is received from the first transponder using the first communication protocol, and if the response signal is not received within the first portion, to disable transmissions of the first reader and enable operation of the second reader, whereby the second reader is configured to use the antenna during a remainder of the defined frame duration when enabled.

The present application discloses a method for selecting a communication protocol in a multi-protocol electronic toll collection system, the system including a reader having at least two multi-protocol RF transceivers, wherein the reader includes a processor configured to control operation of the at least two multi-protocol RF transceivers, wherein each transceiver is connected to a respective antenna configured to define a capture zone in a roadway, and wherein the system employs a fixed frame duration. The method includes transmitting a signal from the first transceiver over its respective antenna using a first communication protocol within a first portion of the fixed frame duration; detecting whether a response signal conforming to the first communication protocol is received by the first transceiver; if the response signal is not received within the first portion of the defined frame duration, then transmitting a second signal from the first transceiver over its respective antenna using a second communication protocol within the remainder of the fixed frame duration; and if the response signal is received within the first portion of the defined frame duration, foregoing use of the second communication protocol and conducting communication using the first communications protocol within the remainder of the fixed frame duration.

In accordance with one aspect, the present application describes a multi-protocol electronic toll collection (ETC) system for conducting toll transactions in connection with vehicles traveling in a roadway, wherein the vehicles are equipped with either a first transponder configured to operate in accordance with a first communications protocol or a second transponder configured to operate in accordance with a second communications protocol. The system includes a reader including two or more RF multiprotocol transceivers and a processor configured to control operation of the at least two multi-protocol RF transceivers; and two or more antennas, each antenna being connected to a respective one of the two or more transceivers, wherein each antenna is positioned to define a respective capture zone within the roadway. The system is configured to operate using a fixed frame duration. The processor is configured to cause the transceivers to transmit a signal from the first transceiver over its respective antenna using the first communication protocol within a first portion of the fixed frame duration, detect whether a response signal conforming to the first communication protocol is received by the first transceiver, if the response signal is not received within the first portion of the defined frame duration, then transmit a second signal from the first transceiver over its respective antenna using a second communication protocol within the remainder of the fixed frame duration, and if the response signal is received within the first portion of the defined frame duration, forego use of the communications protocol within the remainder of the fixed frame duration.

Other aspects and features of the present application will be apparent to those of ordinary skill in the art from a review of the following detailed description when considered in conjunction with the drawings.

### BRIEF DESCRIPTION OF THE DRAWINGS

Reference will now be made, by way of example, to the accompanying drawings which show an embodiment of the present application, and in which:
Figure 1 shows, in block diagram form, one example embodiment of a multi-protocol ETC system in accordance with the present disclosure;
Figure 2 shows a flowchart illustrating an example method of dynamically selecting an operation protocol;
Figure 3 shows an example timing diagram illustrating the method of dynamically selecting an operation protocol;
Figure 4 shows a block diagram of one example embodiment of a multi-protocol ETC system;
Figure 5 shows a block diagram of another example embodiment of a multi-protocol ETC system;
Figure 6 shows, in flowchart form, an example method of operating a multi-protocol ETC system;
Figures 7 and 8 show, in block diagram form, further example embodiments of a multi-protocol ETC system; and
Figures 9 to 12 show example timing diagrams illustrating further methods of dynamically selecting an operation protocol.

### DETAILED DESCRIPTION OF EXAMPLE EMBODIMENTS

Reference will be made below to a primary communications protocol and a secondary communications protocol. In some instances these may be referred to as a first communications protocol and a second communications protocol. Although example embodiments described in the present application refers to a first and second (or, equivalently, a primary and secondary) communications protocol, the present application is more broadly applicable to multiple protocols and may, in some cases, include implementations having three or more communications protocols.

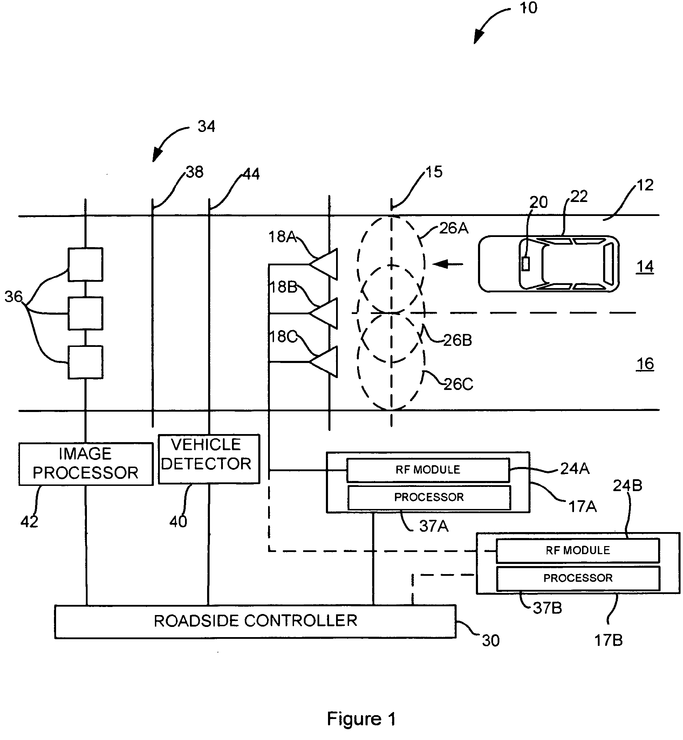

Reference is first made to Figure 1, which shows an example embodiment of a multi-protocol electronic toll collection (ETC) system, illustrated generally by reference numeral 10. In one embodiment, the electronic toll collection system 10 is associated with a gated toll plaza. In another embodiment, the ETC system 10 is associated with an open-road toll processing zone. Other example applications of the electronic toll collection system 10 will be appreciated by those skilled in the art.

As shown in Figure 1, the electronic toll collection system 10 in this example embodiment is installed in connection with a roadway 12 having first and second adjacent lanes 14 and 16. In one example embodiment, the roadway 12 may be a two lane access roadway leading towards or away from a toll highway. The electronic toll collection system 10 in this example includes three roadway antennas 18A, 18B and 18C, each of which is connected to Automatic Vehicle Identification ("AVI") readers 17A and 17B. AVI reader 17A is a reader configured to operate in accordance with a primary protocol, and AVI reader 17B is a reader configured to operate in accordance with a secondary protocol. The roadway antennas 18A, 18B and 18C are coupled to the AVI readers 17A, 17B. It will be appreciated that other antenna configurations may be used and the number of antennas or the number of lanes may be different than those illustrated in Figure 1. For example, the exemplary embodiment of Figure 1 could be modified to eliminate the midpoint antenna 18B so that only two roadway antennas 18A, 18C would be used to provide coverage to the two lanes 14 and 16. The antennas 18A, 18B, 18C may, in some embodiments, be mounted to an overhead gantry or other structure. In some embodiments, there may be multiple primary protocol readers and multiple secondary protocol readers depending on the number of lanes on the highway.

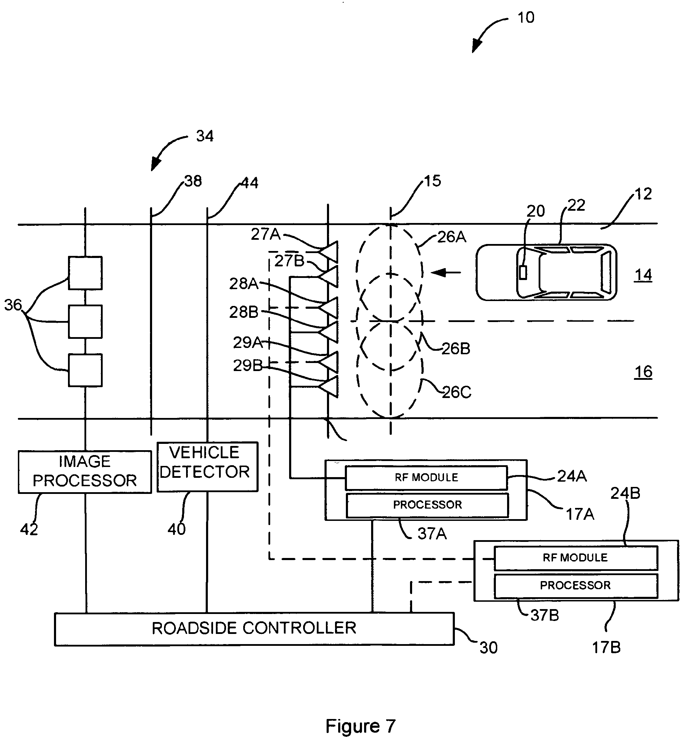

The antennas 18A, 18B, 18C may, in some embodiments be connected directly to both AVI readers 17A, 17B at the same time, such as through an RF coupler for example. In other embodiments, the antennas 18A, 18B, 18C may be selectively connected to either the first reader 17A or the second reader 17B, such as through an RF switch for example. In another embodiment, as illustrated in Figure 7, the first reader 17A and the second reader 17B are connected to two separate antennas 27A, 27B mounted in the same lane, where the two antennas cover substantially the same coverage area in the lane.

AVI readers 17A and 17B are control devices that process RF signals that are sent and received by the roadway antennas 18A, 18B and 18C. The AVI readers 17A and 17B may include a processor 37 (shown individually as 37A and 37B) and a radio frequency (RF) module 24 (shown individually as 24A and 24B). The processor 37 may be configured to control the RF module 24 so as to implement a particular communications protocol. For example, the processor 37A in the first reader 17A may be configured to implement the primary communications protocol. The processor 37B in the second reader 17B may be configured to implement the secondary communications protocol. The processors 37 may include a programmable processing unit, volatile and/or non-volatile memory storing instructions and data necessary for the operation of the processor, and communications interfaces to permit the processor to communicate with the RF module 24 and a roadside controller 30.

The RF module 24 is configured to modulate signals from the processor 37 for transmission as RF signals over the roadway antennas 18A, 18B and 18C, and to de-modulate RF signals received by the roadway antennas 18A, 18B and 18C into a form suitable for use by the processor 37. In this regard, the AVI readers 17A and 17B employ hardware and signal processing techniques that are well known in the art.

The roadway antennas 18A, 18B and 18C, and AVI readers 17A and 17B function to read information from a transponder 20 (shown in the windshield of vehicle 22), to send programming information to the transponder 20, and to verify that the transponder 20 has successfully updated its memory with the programming information.

The roadway antennas 18A, 18B and 18C may be directional transmit and receive antennas which, in the illustrated embodiment, have an orientation such that each of the roadway antennas 18A, 18B and 18C can only receive signals transmitted from a transponder 20 when the transponder 20 is located within a roughly elliptical coverage zone associated with the antenna.

The roadway antennas 18A, 18B and 18C are located above the roadway 12 and arranged such that they have coverage zones 26A, 26B and 26C which are aligned along an axis 15 that is orthogonal to the travel path along roadway 12. In the embodiment illustrated, the major axes of the elliptical coverage zones 26A, 26B and 26C are co-linear with each other, and extend orthogonally to the direction of travel. As is apparent from Figure 1, the coverage zone 26A provides complete coverage of the first lane 14, and the coverage zone 26C provides complete coverage of the second lane 16. The coverage zone 26B overlaps both of the coverage zones 26A and 26C.

It will be understood that although the coverage zones 26A, 26B and 26C are illustrated as having identical, perfect elliptical shapes, in reality the actual shapes of the coverage zones 26A, 26B and 26C will typically not be perfectly elliptical, but will have a shape that is dependent upon a number of factors, including RF reflections or interference caused by nearby structures, the antenna pattern and mounting orientation.

It will also be understood that, although elliptical coverage zones are disclosed in the above embodiment, other shapes could also be used for the coverage areas 26A, 26B or 26C. Furthermore, while three coverage areas 26A, 26B, 26C are shown, the number of coverage areas may vary.

The AVI readers 17A and 17B are connected to the roadside controller 30. The roadside controller 30 may be configured to process toll transactions based on transponder information it receives from the AVI readers 17A and 17B.

In open road toll systems, the electronic toll collection system 10 will often include a vehicle imaging system, which is indicated generally by reference numeral 34. The imaging system 34 includes an image processor 42 to which is connected a number of cameras 36, arranged to cover the width of the roadway for capturing images of vehicles as they cross a camera line 38 that extends orthogonally across the roadway 12. The image processor 42 is connected to the roadside controller 30, and operation of the cameras 36 is synchronized by the roadside controller 30 in conjunction with a vehicle detector 40. The vehicle detector 40 which is connected to the roadside controller 30 detects when a vehicle has crossed a vehicle detection line 44 that extends orthogonally across the roadway 12, which is located before the camera line 38 (relative to the direction of travel). The output of the vehicle detector 40 is used by the roadside controller 30 to control the operation of the cameras 36. The vehicle detector 40 can take a number of different configurations that are well known in the art, for example it can be a device which detects the obstruction of light by an object.

The transponder 20 has a modem that is configured to de-modulate RF signals received by the transponder antenna into a form suitable for use by a transponder controller. The modem is also configured to modulate signals from the transponder controller for transmission as an RF signal over the transponder antenna.

The transponder 20 also includes a memory that is connected to the transponder controller. The transponder controller may access the memory to store and retrieve data. The memory may be random access memory (RAM) or flash memory. In one embodiment, the memory is the integrated memory of a microcontroller.

The memory of the transponder 20 may have a location of memory reserved for storing data which may be altered by the AVI readers 17A and 17B. This location of memory may include, for example, fields for recording entry and exit points of the vehicle 22 and times and dates of entry or exit of the vehicle 22. It may also include account information which the AVI readers 17A and 17B verify and then debit in an automated parking system, automated drive-through retail outlet, or other mobile commerce system. In the course of an electronic tolling operation, the AVI readers 17A and 17B may need to update the memory of the transponder 20.

The memory of the transponder 20 may also contain an area of memory that cannot be updated by the AVI readers 17A and 17B. For example, the memory may contain fields which are set by the manufacturer or agency deploying the transponders which tend to relate to the characteristics of the transponder 20 or the vehicle 20 and/or customer.

In one embodiment, for every three roadway antennas 18A, 18B and 18C, there will be a AVI reader 17A that operates in a primary protocol, and an AVI reader 17B that operates in a secondary protocol. In some embodiments only one AVI reader is connected to the available roadway antenna 18A, 18B or 18C at any one time. In this configuration, the AVI readers 17A and 17B are connected to the roadway antennas 18A, 18B, and 18C using RF switches. Depending on the dynamic selection of the protocol, one of the AVI readers 17A or 17B will be connected to the antenna to either operate under the primary protocol or a secondary protocol. In some embodiments, the AVI reader 17A will initially be connected to one of the roadway antennas (18A, 18B, 18C) via the RF switch. If a transponder 20 using the primary protocol is detected, then the AVI reader 17A maintains its access to the roadway antenna so that it may perform an electronic toll transaction with the detected transponder 20. If a transponder 20 of the primary protocol is not detected within a predetermined duration, then the AVI reader 17A will cause the RF switch to disconnect the first reader 17A from the antenna and to connect the second reader 17B to the antenna.

In another embodiment, AVI readers 17A and 17B may be both connected to one of the roadway antennas 18A, 18B and 18C using a coupler. In this configuration, the first or primary reader 17A attempts to detect a transponder 20. If it does not locate a transponder using the primary protocol within a predetermined duration, then it disables the primary reader 17A and enables operation of the secondary reader 17B, so that the secondary reader 17B may attempt to locate a transponder using the secondary protocol.

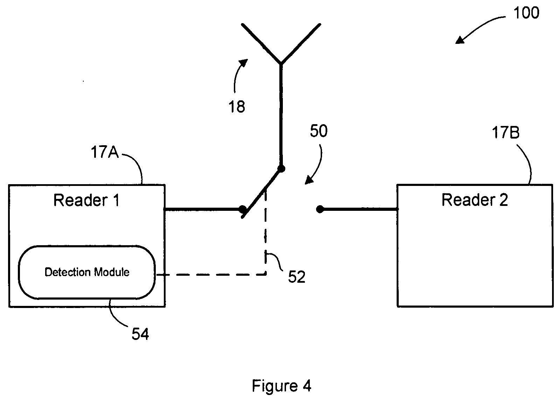

Reference is now made to Figure 4, which shows, in block diagram form, an example embodiment of a multi-protocol ETC system 100. In this simplified example, the ETC system 100 includes an antenna 18 and the primary reader 17A and secondary reader 17B are connected to the antenna 18 through an RF switch 50.

The first reader 17A includes a detection module 54. The detection module 54 may be implemented in software or hardware. In some embodiments, the detection module 54 is a software routine operating on the processor 37A (Fig. 1) and configuring the processor 37A to carry out the detection and signalling operations described herein. It will be appreciated that the detection module 54 is not necessarily a stand-alone software routine or module and may be incorporated into a general ETC software routine or ASIC. It is illustrated here as a separate module for ease of discussion.

The detection module 54 is configured to determine whether a transponder using the primary communication protocol is detected based on receipt of a response signal by the first reader 17A. If a suitable response signal is not received by the first reader 17A within a predetermined duration, then the detection module 54 determines that no primary transponder is present in the roadway 12 (Fig .1) and it causes the first reader 17A to output a switch signal 52. The RF switch 50 operates under control of the switch signal 52. The first reader 17A causes the RF switch 50 to disconnect the first reader 17A from the antenna 18 and to connect the second reader 17B to the antenna 18 when the detection module 54 determines that no primary transponder is present within the predetermined duration. The second reader 17B is then connected to the antenna 18 and attempts to detect a secondary transponder using the secondary communications protocol.

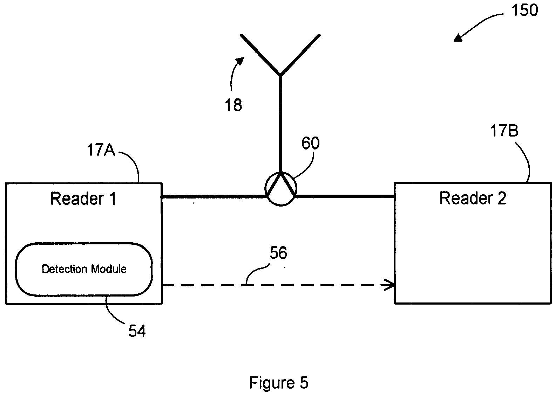

Reference is now made to Figure 5, which shows another embodiment of a multi-protocol ETC system 150. In this embodiment the ETC system 150 includes an RF coupler 60 connecting the first reader 17A and second reader 17B to the antenna 18 at the same time. The detection module 52 is configured to cause the first reader 17A to output an enablement signal 56. The enablement signal 56 is supplied to the second reader 17B and it enables or disables the second reader 17B. Accordingly the detection module 54 is configured to cause the first reader 17A to use the antenna 18 to detect transponders using the first communications protocol during the predetermined duration, whilst the enablement signal 56 disables the second reader 17B. By "disable", the present application means to cause the second reader 17B to cease outputting RF signals to the antenna 18 and to ignore incoming RF signals from the antenna 18.

In the event that the detection module 54 determines that no transponder using the first communications protocol is present within the predetermined duration, it disables the first reader 17A and causes the first reader 17A to output the enablement signal 56 to the second reader 17B so as to enable operation of the second reader 17B. The second reader 17B then uses the second communications protocol to attempt to locate secondary transponders. By "disable", the present application means to cause the first reader 17A to cease outputting RF signals to the antenna 18 and to ignore incoming RF signals from the antenna 18. In another embodiment, the first reader 17A is connected to a first antenna 27A and the second reader 17B is connected to a second antenna 27B, where the first and second antennas 27A, 27B cover substantially the same coverage area. In this embodiment, the first reader 17A is disabled and outputs the enablement signal 56 to the second reader 17B. In response to the enablement signal 56, the second reader 17B begin transmissions to the second antenna 27B.

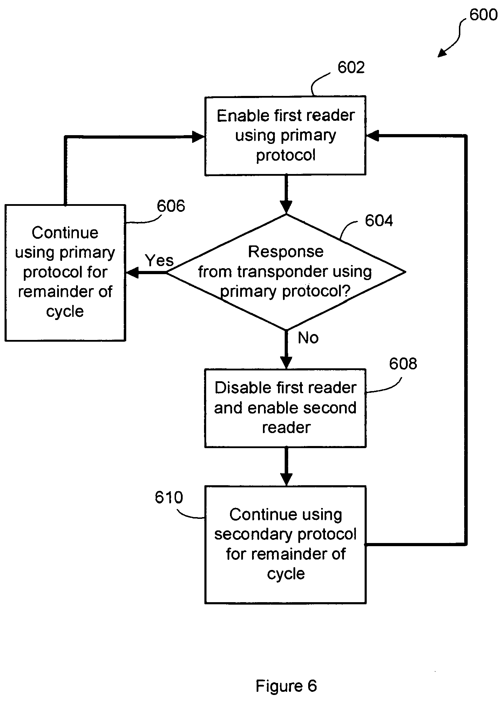

Operation of a multi-protocol electronic toll collection system is now illustrated with reference to Figure 6, which shows an example method 600 of dynamically selecting a communication protocol. In this example method, the system is configured to recognize and use a primary protocol or a secondary protocol. In some embodiments, one or both of the protocols may be active protocols, meaning they involve transmitting a polling or trigger signal from the reader and listening for a response from any transponder in the capture zone. In some embodiments, one or both of the protocols may be passive tag protocols, meaning the reader broadcasts a continuous wave RF signal and a transponder in the capture zone responds by modulating the continuous wave RF signal, for example using backscatter modulation. The system is configured to operate in accordance with a cyclic protocol. In other words, communications between readers and tags/transponders in the system are conducted within a cycle. The cycle may have a fixed frame duration; although, in some embodiments, the frame duration may be variable.

The method 600 begins in step 602 with enablement of the first reader, wherein the first reader is configured to use the primary protocol. The first reader is connected to the antenna. The first reader may be connected to the antenna using an RF coupler, RF switch, or other RF connection.

In step 604, the first reader assesses whether it has received a response from a transponder using the primary protocol. The determination as to whether a response has been received is dependent upon the primary protocol. For example, if the primary protocol is an active tag protocol that specifies a time period within which the transponder will respond to a trigger or polling signal, then step 604 involves sending the trigger or polling signal and waiting for a response within the specified time period. In another example, if the primary protocol is a passive tag protocol that relies upon modulation of a continuous wave signal within a specified time period, then step 604 involves broadcasting the continuous wave signal and waiting the specified time period to determine whether modulation of the signal has been detected. In some embodiments, the detection of a response from a transponder may involve monitoring a variation in the amplitude, phase or frequency of the response signal or a combination thereof.

If, in step 604, the first reader determines that it has received a response from a transponder using the primary protocol, then the method 600 goes to step 606. In step 606, the first reader continues using the primary protocol for communications with the transponder for the remainder of the cycle. The method 600 then loops back to step 602.

If, in step 604, the first reader determines that it has not received a response from a transponder using the primary protocol, then the method 600 goes to step 608. In step 608, the first reader is disabled and the second reader is enabled. In this context the terms "disabled" and "enabled" mean that the first reader ceases using the antenna for communications and the second reader begins using the antenna for communications. The second reader communicates in accordance with the secondary protocol. The "disabling" of the first reader may include causing its transceiver to cease operations, disconnecting it from the antenna, or both. The "enabling" of the second reader may include causing its transceiver to being operations, connecting it to the antenna, or both. The first reader may send a signal or other message to the second reader and/or to an RF switch to cause the enablement of the second reader.

In step 610, the second reader continues using the antenna for communications in accordance with the secondary protocol for the remainder of the cycle. At the end of the cycle, the method 600 loops back to 602 to being using the first reader and the primary protocol again for the beginning of the next cycle.

It will be understood that the cycle length is sufficient for the first reader to assess, in accordance with the primary protocol, whether a transponder using the primary protocol is present and, if not, for the second reader to begin using the secondary protocol and complete communications with a transponder using the secondary protocol during the remainder of the cycle.

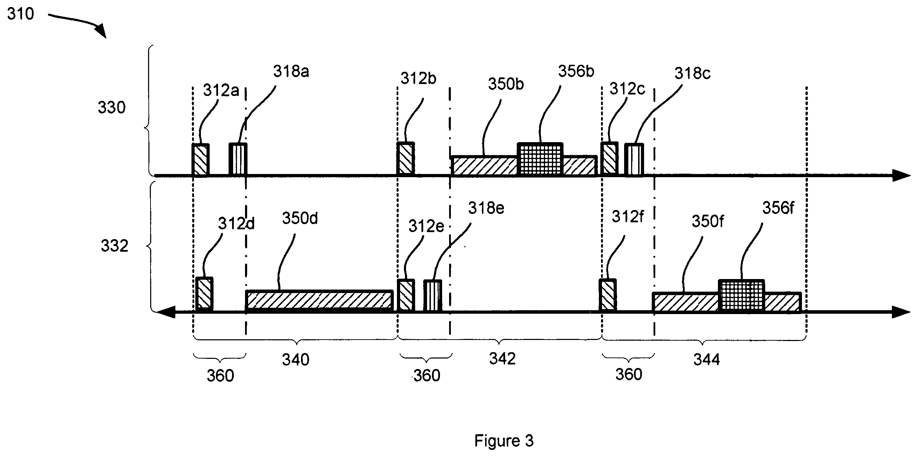

Reference is now made to Figure 3 which shows a timing diagram 310 for one embodiment of a multi-protocol electronic toll collection system. In the embodiment shown in Figure 3, the system uses a cyclic protocol in which an adjacent series of two or more antennas are used in a time-division multiplexed sequence. Each antenna is used in turn to detect and communicate with transponders within its respective capture zone. In this particular embodiment, there are three antennas. Accordingly, the cyclic protocol used by the system has successive superframes 330, 332 that each include a series of three frames 340, 342, 344. The cyclic protocol is configured such that the second superframe 332 occurs immediately after the first superframe 330.

Each frame 340, 342, 344 in each superframe 330, 332 corresponds to communications on a different one of the antennas 18A, 18B, 18C. For example, the first frame 340 of each superframe 330, 332 may correspond to communications on the first antenna 18A and the second frame 342 of each of superframe 330, 332 may correspond to communication the second antenna 18B, and the third frame 344 of each superframe 330, 332 may correspond to communications on the third antenna 18C. The number of regular frames within the superframe may be dependent on the number of antennas in the ETC system.

In the embodiment illustrated in Figure 3, each of the frames 340, 342, 344 are of the same duration and are of sufficient duration to permit reading, and if applicable, programming, and verifying operations to occur during each frame 340, 342, 344. In one example embodiment, where the primary protocol is an active tag protocol, each frame is about 2.3ms in duration. In another embodiment, the primary protocol is a passive tag protocol such as ISO 10374, and the duration of each frame is about 13ms in duration.

In the following example embodiment, the primary protocol is an active tag protocol in which a polling or trigger signal is sent by the reader at the beginning of a frame, and a transponder within the capture zone responds to the trigger signal with a response signal. Accordingly, in this example embodiment, each frame 340, 342, 344 of the timing diagram 310 illustrates a trigger signal 312a, 312b, 312c, 312d, 312e, 312f which is transmitted by the AVI reader 17A operating in the primary protocol to the transponder 20, using the antennas 18A, 18B, 18C. For example, in the example discussed above, where the first frame 340 corresponds to communications on the first antenna 18A, the trigger signal 312a in the first frame 340 of the first superframe 330 and the trigger signal 312d of the first frame 340 of the second superframe 332 are transmitted using the first antenna 18A.

Following the transmission of the trigger signal 312a, 312b, 312c, 312d, 312e, 312f, the first reader is configured to subsequently wait a predetermined duration 360, in some embodiments about 105µs, for a response from a transponder 20 operating using the primary protocol and within the broadcast coverage area.

The transponders 20 of the primary protocol are configured to transmit a response signal 318a, 318c, 318e following the receipt of the trigger signal 312a, 312c, 312e. The response signal 318a, 318c, 318e includes at least some of the contents of the transponder memory 20.

If transponder 20 configured to use the primary protocol is within the coverage area (that is it has received the trigger signal 312a, 312b, 312c, 312d, 312e, 312f) and sends a response within the first 105µs of the frame, the entire remainder of the frame 340, 342, or 344 is dedicated to the operating in the primary protocol. For example, in the exemplary timing diagram 310 of Figure 3, response signals 318a, 318c, and 318e are received in the first and third frames 340 and 344 of the first superframe 330 and in the second frame 342 of the second superframe 332.

Following the receipt of the response signal 318a, 318c, 318e further communications may occur between the first reader and the transponder using the primary protocol (not shown). For example, the primary protocol may specify that the first reader sends a programming signal. The programming signal may include toll payment information, toll plaza or lane identification information, or other data. The transponder may store this information in memory. The first reader may also be configured to send a further trigger or polling signal and await a response signal from the transponder to ensure that the programming information was received and correctly stored by the transponder. This format for communications may be termed a read-program-verify cycle. These communications occur over the duration of an individual frame, such as frames 340, 342, 344.

In some circumstances, a transponder that passes through the toll station or zone is not configured to use the primary protocol. If a response from a transponder in accordance with the primary protocol is not received within the predetermined duration 360 after the transmission of a trigger signal, the first reader will determine that there is no transponder operating in accordance with the primary protocol within the coverage area of the antenna the first reader is currently using. Accordingly, it will enable the second reader, thereby permitting the second reader to use the remainder of the frame 340, 342, 344 for communications in accordance with the secondary protocol.

In some embodiments, the first and second readers are connected to roadways antennas via a bank of RF switches. The RF switches may be controlled by the first reader. Where a transponder using the primary protocol is not detected within the first 105µs of the frame, the first reader will cause the RF switch to connect the applicable roadway antenna (18A, 18B or 18C) to the second reader that operates using the secondary protocol. The second reader may be notified of an antenna access opportunity via an indication means, such as a sync pulse, from the first reader. This provides the second reader with an opportunity to perform an electronic toll transaction with a transponder configured to use the secondary protocol in the remaining duration of the frame. In some embodiment, the frames have a length of about 2.3 ms, meaning that the second reader will have about 2.2 ms remaining within which to conduct a toll transaction using the secondary protocol.

In some embodiments, the secondary protocol is a continuous wave protocol. In such embodiments, the second reader, after acquiring access to a roadway antenna, broadcasts a continuous wave signal 350 (shown individually as 350b, 350d, 350f) within the coverage area. The second reader waits for a response signal (for example 356b, 356f) from a transponder operating using the secondary protocol within the continuous wave signal's coverage area. If a transponder is within the coverage area and responds, the second reader may perform an electronic toll transaction for this vehicle under the secondary protocol.

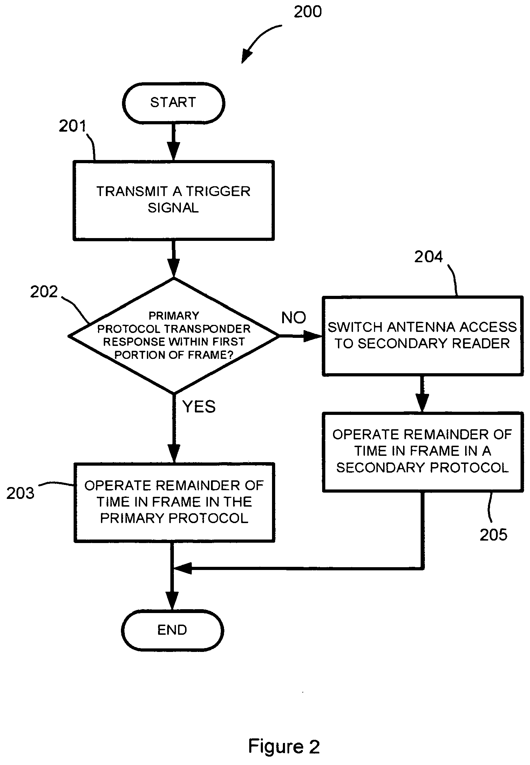

Reference will now also be made to Figure 1 in conjunction with Figure 2, which shows, in flowchart form, an example dynamic protocol selection method 200. In the following example, the primary protocol is an active tag protocol. In another embodiment, the primary protocol may be a passive tag protocol. The method 200 applies time diversity, as opposed to frequency or spatial diversity, to solve the problem of interference between equipment of different protocols. The method 200 begins with the AVI reader 17A, operating in a primary protocol and connected to one of the roadway antennas (18A, 18B or 18C), sending a broadcast trigger signal (i.e. 312a, 312b etc) to a particular coverage area (201). After the AVI reader 17A sends the trigger signal, the dynamic protocol selection method of the present disclosure will wait, for a predetermined duration, for a response from a primary protocol transponder 20 (202). In some embodiments, the predetermined duration is the first 105µs of a frame. If a primary tag is detected within the predetermined duration, then the primary protocol AVI reader 17A continues to access one of the roadway antennas (18A, 18B, or 18C) to perform the electronic toll transaction (203). If a primary protocol tag is not detected within the predetermined duration, then access to the roadway antenna (18A, 18B, or 18C) is switched over from the AVI reader 17A operating in the primary protocol to AVI reader 17B operating in a secondary protocol (204). The remainder of the time left in the frame, approximately 2.2ms in some embodiments, is used for the secondary AVI reader 17B to operate under the secondary protocol (205). The remainder of time in the frame is sufficient time for the secondary protocol to perform an electronic toll transaction with a transponder 20 of a secondary protocol type.

The system and method of the present disclosure utilizes the time in the frame in a way so that if a primary protocol tag is not detected within a predetermined amount of time, the remainder of time in the frame is used for operation in another, secondary protocol. This leverages dead space in a frame of a cyclic protocol, where the remaining time of the frame is not used when a transponder of the primary protocol is not detected. The secondary protocol is only relevant when a primary protocol tag is not detected in the capture zone within the predetermined duration. Accordingly, the dynamic protocol selection method of the present application ensures that each frame may be utilized to perform an electronic toll transaction, either in a primary protocol, or in a secondary protocol.

The dynamic protocol selection system and method may be used in conjunction with existing infrastructure. A secondary protocol AVI reader 17B may be added to existing infrastructure that operates in a primary protocol so that the ETC system is modified to operate and communicate with transponders 20 of both a primary protocol and secondary protocol type.

In other embodiments, there may be multiple primary and secondary protocol readers. The ratio of primary readers to secondary readers may be 1:1; that is for the roadway coverage areas serviced by antennas 18A, 18B and 18C, there is one primary reader and one secondary reader. In some embodiments, only some roadway coverage areas covering certain lanes may have both primary and secondary readers. Additionally, in some embodiments, the system and method of the present application may support a primary protocol and more than one secondary protocols.

Interference between equipment of different protocols is limited in the ETC system of the present application by using a time division multiplexed sequence. The dynamic protocol selection method and system may also be used in conjunction with antenna to lane mapping, which would ensure that there are at least 3 lanes (approximately >36 ft) of separation between simultaneously active readers and/or transceivers.

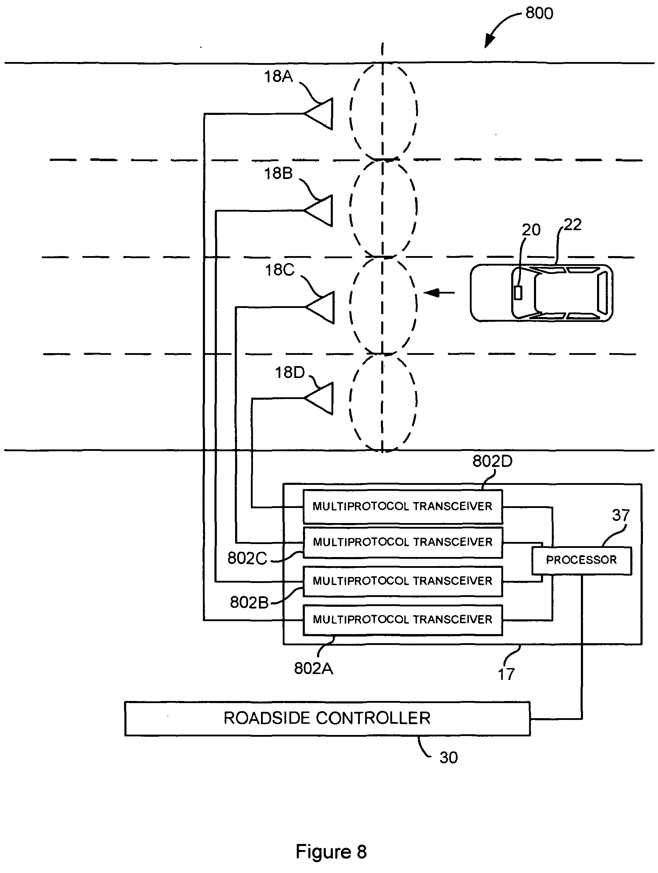

Reference will now be made to Figure 8, which shows an ETC system 800 configured in accordance with another aspect of the present application. The ETC system 800 includes a single reader 17 chassis configured to support (in this embodiment) up to four RF multiprotocol transceivers 802 (shown individually as 802a, 802b, 802c, and 802d). Each multiprotocol transceiver 802 is configured to operate in accordance with two or more ETC protocols. Each transceiver 802 is connected to its own antenna 18.

The transceivers 802 operate under the control of the processor 37, which controls which of the transceivers 802 is active at any given time and what protocol is used by each transceiver 802.

The reader 17 and, in particular, the processor 37, operates in accordance with a predefined fixed frame duration. Moreover, the reader 17 operates cyclically, meaning that it is configured to cycle through each of the transceivers 802 when time division multiplexed. The reader 17 may cycle through frequencies with each transceiver 802 when the transceivers 802 are frequency multiplexed. Additionally, the reader 17 is configured to repeat the cycles.

In a time division multiplexed embodiment, the fixed time duration may be the time slot during which each transceiver 802 is used in turn to communicate with transponders in its capture zone. In a frequency division multiplexed embodiment, the fixed time duration may be the time slot during which all transceivers 802 are used at the same time to communicate with transponders in their respective capture zones using their respective sub-bands. In some instances, as will be outlined below, the reader 17 may have two or more fixed frame durations. In some cases the reader 17 may use time multiplexing for one or more ETC protocols and frequency multiplexing for one or more protocols. The fixed frame durations result in the reader 17 having a fixed cycle time or "superframe", which allows for multiple readers 17 to be chained together at an installation in which more than four antennas are needed (for readers having four transceivers).

In accordance with one aspect of the present application, the reader 17 is configured to use more than one protocol in the fixed frame duration. In particular, the reader 17 may be configured to cause one of the transceivers 802 use a first protocol at the beginning of the fixed frame duration and, if no transponder is detected in the area, then to cause that transceiver 802 to use a second protocol for the remainder of the fixed frame duration. Detailed example embodiments are set out below.

As the example embodiments below illustrate, the characteristics of the protocols may determine how they may be combined.

Each of the two protocols used in an embodiment of the present system 800 has a predefined communication duration. This is the length of time the protocol requires to conduct an ETC transaction, where an "ETC transaction" is a communication between the reader and transponder in accordance with the given protocol. The communication may be for the purpose of reading the transponder, programming the transponder, or conducting a toll transaction, in some cases. Irrespective of the purpose of the communication, the given protocols require a predetermined amount of time to carry out those communications. That predetermined amount of time may be referred to herein as the protocol's "communication duration".

To realize efficiencies, the fixed frame duration is set to be of a duration long enough to complete an ETC transaction in accordance with either of the protocols, *i.e*. it is at least as long as either of the two communication durations, but shorter than the sum of the two communication durations. That is, the fixed frame is too short to serially conduct a full ETC transaction for both protocols. In fact, the first of the protocols has a detection time or window within which it will know whether or not a transponder is present that is configured to communicate using the first protocol. The fixed frame duration is sufficiently long to permit the first protocol to determine that there is no transponder present that uses the first protocol, and to then switch to the second protocol and to complete an ETC transaction in accordance with the second protocol. As will be explained below, in some cases the use of the first protocol during a first portion of the fixed frame can shorten the time required to complete the ETC transaction in accordance with the second protocol, particularly in the case of passive protocols.

Example ETC communication protocols include active protocols, such as certain proprietary protocols. For example, one such protocol includes broadcast of a trigger signal. An active transponder is configured to listen for the trigger signal and, once detected, to wake up an active transceiver to transmit a response message. A basic read operation in the example protocol has a communication duration of about 700 µs. It will be understood that this is an example protocol and other active ETC communications protocols may be used in other embodiments.

Example ETC communication protocols also include passive protocols, such as the State of California Code of Regulation (CALTRAN) Title 21 (T21) protocol, the ISO 18000-6B protocol, and the ISO 18000-6C protocol. These protocols rely upon the reader broadcasting a continuous wave RF signal to energize and wake up the transponder (often, a sticker tag). Once energized, the transponder replies by modulating the continuous wave RF signal, the modulation of which is then detected by the reader. A basic read operation in the ISO 18000-6B protocol, for example, has a communication duration of about 5200 µs. The window within which such a reader will know whether a transponder is present is approximately a few hundred microseconds; the remainder of the duration is used for transponder data reading and decoding. Some passive protocols are wideband protocols (*e.g*. a 6 MHz channel), while other protocols are narrowband protocols (*e.g*. 500 kHz channels). In many instances, in addition to broadcasting a continuous wave RF signal to energize transponders in the vicinity, the reader modulates the RF signal to transmit an instruction or command signal.

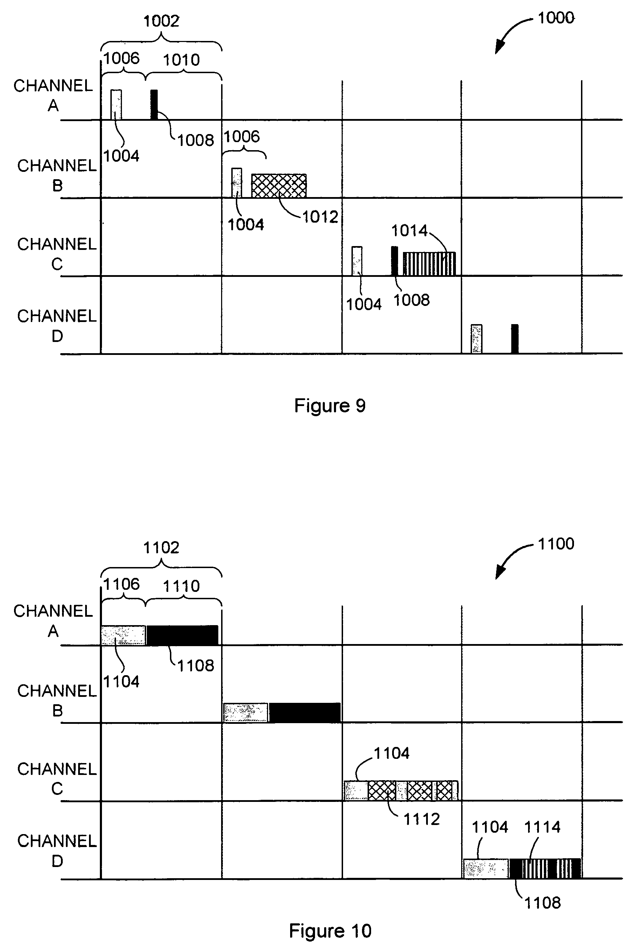

Reference is now made to Figure 9, which illustrates a sample timing diagram 1000 for a four channel (antenna) example implementation. Each transceiver 802 (Fig. 8) communicates using its respective antenna 18 (Fig. 8) on one of the channels. It will be noted that this embodiment employs time-division multiplexing in which only one of the transceivers is active at a time.

This example implementation involves the use of a first active protocol and a second active protocol. The timing diagram 1000 shows a fixed frame duration 1002.

The selection of the first active protocol may be based upon the expected of number of transponders in the area operable in accordance with that protocol. A less commonly-used protocol may be used as the second protocol.

The first active protocol includes broadcast of a trigger signal 1004 or wake-up signal. After broadcasting the trigger signal 1004, the reader awaits a response from any transponder in the vicinity. The response window may be a few hundred microseconds in some cases. Accordingly, within a first portion 1006 of the fixed frame duration 1002, the reader will know whether or not there are any transponders that operate in accordance with the first protocol present within the capture zone.

In this embodiment, the second protocol also operates by broadcasting a trigger pulse 1008. The trigger pulse 1008 in this case has characteristics different from the trigger signal 1004 used by the first protocol. In some cases, they may be similar enough that either one will cause a transponder to response, irrespective of whether the transponder is configured to use the first or second protocol.

If the transceiver does not receive a response signal from a transponder in accordance with the first protocol within the first portion 1006, then the reader causes the transceiver to begin using the second protocol for the remainder 1010 of the fixed frame duration 1002. In particular, the transceiver broadcasts the trigger pulse 1008 and awaits a response from any transponder in the vicinity that is configured to use the second protocol.

In the case of the example illustrated in Figure 9, it will be noted that the Channel A antenna sends the trigger signal 1004 and awaits a response signal. Having received no response signal within the first portion 1006, the transceiver for the Channel A antenna switches to using the second protocol and sends the trigger pulse 1008 and awaits a response signal.

The Channel B antenna, in this embodiment, receives a response signal 1012 from a transponder using the first protocol. The response signal 1012 is detected before expiry of the first portion 1006 of the fixed frame duration 1002. The transceiver connected to the Channel B antenna uses the first protocol to communicate with the transponder for the remainder 1010 of the fixed frame duration and forgoes any use of the second protocol during this cycle.

The Channel C antenna does not receive a first protocol response signal, so after the first portion 1006 of the fixed frame duration 1002 it sends the trigger pulse 1008. In reply it receives a second protocol reply signal 1014 from a transponder in the area configured to use the second protocol. The transceiver and transponder use the remainder 1010 of the fixed frame duration 1002 to complete their communications using the second protocol. As noted above, "complete" communications may include conducting a read of the transponder memory, programming the transponder memory with data, conducting an ETC transaction, or other such communications depending on the configuration of a particular implementation.

For simplicity, Figure 9 shows the response signal 1012 and reply signal 1014 as a single block, although it will be appreciated that in some embodiments this may involve multiple exchanges of communication between the reader and the transponder in that time period.

Reference is now made to Figure 10, which shows another sample timing diagram 1100 for a four channel (antenna) implementation. In this example, the first and second protocols are passive ETC communications protocols. The ETC system in this example uses a fixed frame duration 1102, which may be the same length or a different length from the fixed frame duration 1002 described above in connection with Figure 9. The length of the first frame duration 1102 is dependent upon the characteristics of the protocols and their communication durations.

The first protocol initiates communications by broadcasting a continuous wave RF signal 1104. A passive transponder in the area that receives the continuous wave RF signal 1104 is awoken. The continuous wave RF signal 1104 may be modulated by a polling or query or command signal having a certain data rate and characteristics indicative of the first protocol. A transponder in the area that is configured to recognize the first protocol polling or query signal responds by modulating the continuous wave RF signal 1104 to communicate a response signal 1112. If that response signal 1112 is detected by the reader within a first portion 1106 of the fixed frame duration 1102, then the reader will cause the transceiver to continue using the first protocol for the remainder 1110 of the fixed frame duration 1102.

If no response signal 1112 is detected by the reader within the first portion 1106 of the fixed frame duration 1102, then the reader causes the transceiver to begin using the second protocol. Accordingly, during the remainder 1110 of the fixed frame duration 1102, the transceiver sends a second continuous wave RF signal 1108. Although this is referred to as a "second" continuous wave RF signal 1108, in many embodiments the second protocol may use a similar or the same continuous wave RF signal and may only involve using a different modulation or data rate for transmitting a polling signal to transponders in the area. Advantageously, in many instances the communication duration for the second protocol is shortened because the transponders in the area have already been awakened by the continuous wave RF signal 1104 sent in accordance with the first protocol. The second protocol communications may therefore dispense with a wait period that may otherwise normally be required before sending the second protocol polling message.

The reminder 1110 of the fixed frame duration 1102 is then used for second protocol communications, including the receipt of any reply messages 1114 communicated by transponders configured to operate using the second protocol by modulating the carrier wave.

Referring still to Figure 10, it will be noted that the four channels are time division multiplexed in this example. Channels A and B detect no transponders communicating using the first protocol, so their respective transceiver switches to using the second protocol after the first portion 1106 of the fixed frame duration 1102. Channel C detects the response signal 1112 from a transponder using the first protocol. Accordingly, the first protocol is used for the entire first frame duration 1102. Channel D does not receive a response in accordance with the first protocol, so it switches to the second protocol after the first portion 1106, at which point it then receives a reply message 1114 from a transponder using the second protocol.

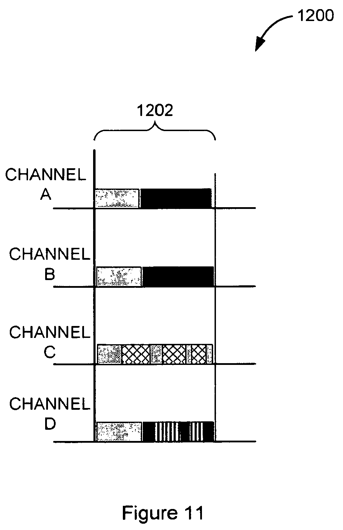

Reference is now made to Figure 11, which shows a further example timing diagram 1200 illustrating operation of another example four channel ETC system. In this embodiment, the two protocols in use are narrowband protocols, which allows for frequency division multiplexing of the channels. Accordingly, in this example, all four Channels A, B, C, and D are used in the fixed frame duration 1202. The two protocols in use are both passive protocols, as is the case illustrated above in connection with Figure 10.

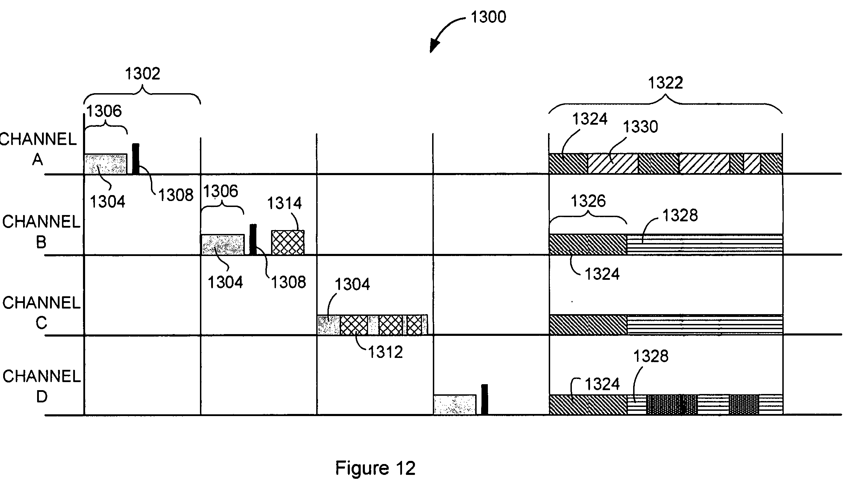

Reference will now be made to Figure 12, which shows another example timing diagram 1300 illustrating operation of a four channel multiprotocol ETC system using four ETC protocols. In this example, the first protocol is a passive wideband protocol. The second protocol is an active wideband protocol. The third and fourth protocols are passive narrowband protocols.

The system employs a first fixed frame duration 1302. In one embodiment, the first fixed frame duration is about 2.3 ms. The transceivers are time division multiplexed, meaning each transceiver (Channels A - D) are allocated their own first fixed frame duration. The system further employs a second fixed frame duration 1322. In one embodiment, the second fixed frame duration is about 6 ms. The transceivers are frequency division multiplexed for the second fixed frame duration 1322.

As can be seen in Figure 12, the first protocol is used in a first portion 1306 of the first fixed frame duration 1302. The first protocol involves transmission of a continuous wave RF signal 1304 and, if any transponders configured to use the first protocol are present, detection of a response signal 1312 during the first portion 1306. If the response signal 1312 is detected during the first portion 1306, then the transceiver continues to use the first protocol during the remainder of the first fixed frame duration 1302.

If no response signal 1312 is detected during the first portion 1306, then the transceiver switches to using the second protocol by sending a trigger signal 1308. If any transponders that use the second protocol are in the capture zone, they reply with a reply signal 1314.

After cycling through the four channels, the reader then tests the third and fourth protocols during the second fixed frame duration 1322. The third and fourth protocols are passive narrowband protocols. The third protocol is initially used in the second fixed frame duration 1322. The third protocol involves transmitting a continuous wave RF signal 1324 during a first part 1326 of the second fixed frame duration 1322. The continuous wave RF signal 1324 may be modulated in accordance with the third protocol to communicate a polling or read signal to any transponders in the area. If any third protocol transponder is in the area, is awakened, and detects the polling signal, then it responds with a response signal 1330 using the third protocol. If the response signal 1330 is detected by a transceiver within the first part 1326 of the second fixed frame duration 1322, then the transceiver continues using the third protocol for the remainder of the second fixed frame duration 1322, as illustrated in the case of Channel A in Figure 12. Otherwise, the transceiver switches to the use of the fourth protocol for the remainder of the second fixed frame duration 1322 by transmitting a continuous wave RF signal 1328 containing a polling or other message in accordance with the fourth protocol.

Certain adaptations and modifications of the invention will be obvious to those skilled in the art when considered in light of this description. Therefore, the above discussed embodiments are considered to be illustrative and not restrictive, the scope of the invention being indicated by the appended claims rather than the foregoing description, and all changes which come within the meaning and range of equivalency of the claims are therefore intended to be embraced therein.

## Claims

1. A method for selecting a communication protocol in a multi-protocol electronic toll collection system (800), the system including a reader (17) having at least one multi-protocol RF transceiver (802), wherein the reader includes a processor (37) configured to control operation of the at least one multi-protocol RF transceiver (802), wherein each transceiver is connected to a respective antenna (18) configured to define a capture zone in a roadway, and wherein the system employs a fixed frame duration, the method comprising:
transmitting a signal from the first transceiver over its respective antenna using a first communication protocol within a first portion (1006) of the fixed frame duration (1002);
detecting whether a response signal (1012) conforming to the first communication protocol is received by the first transceiver;
if the response signal (1012) is not received within the first portion (1006) of the fixed frame duration (1002), then transmitting a second signal (1008) from the first transceiver over its respective antenna using a second communication protocol within the remainder of the fixed frame duration (1002); and
if the response signal (1012) is received within the first portion (1006) of the fixed frame duration (1002), foregoing use of the second communication protocol and conducting communication using the first communications protocol within the remainder of the fixed frame duration (1002),
wherein the first communication protocol has a first communication duration for communicating with transponders, wherein the second communication protocol has a second communication duration for communicating with transponders, and wherein the fixed frame duration (1002) is longer than the first communication duration, longer than the second communication duration, and shorter than the combined lengths of the first and second communication durations.

2. The method claimed in claim 1, wherein the reader (17) has at least two multi-protocol RF transceivers (802).

3. The method claimed in claim 1 or claim 2, wherein the first communication protocol is a passive protocol, and wherein transmitting the signal from the first transceiver comprises transmitting a continuous wave signal modulated during the first portion (1006).

4. The method claimed in claim 3, wherein the second communication protocol is a further passive protocol having a predefined communication duration that includes a transponder wake-up time, and wherein the remainder of the fixed frame duration is shorter than the predefined communication duration.

5. The method claimed in claim 3, wherein the second communication protocol is an active protocol, and wherein transmitting a second signal from the first transceiver (802) over its respective antenna (18) using a second communications protocol comprises ceasing to transmit the continuous wave signal during the remainder of the fixed frame duration (1002) and transmitting a trigger signal.

6. The method claimed in claim 5, wherein transmitting a second signal further comprises detecting a reply signal and performing a transponder programming operation using the second communication protocol within the remainder of the fixed frame duration (1002).

7. The method claimed in claim 6, wherein performing a transponder programming operation comprises sending a programming signal via the respective antenna during the remainder of the fixed frame duration (1002).

8. The method claimed in any one of claims 2 to 7, wherein the at least two multi-protocol RF transceivers (802) include a second transceiver (802b), a third transceiver (802c) and a fourth transceiver (802d), and wherein said method is cyclically performed for successive fixed frame durations (1002) using each of said first transceiver, said second transceiver, said third transceiver, and said fourth transceiver, in turn.

9. The method claimed in claim 8, wherein the method further includes, once each cycle, simultaneously using all the at least two multi-protocol RF transceivers (802) to attempt communications in accordance with a narrowband communication protocol within a further fixed frame duration (1202, 1322), and wherein frequency division multiplexing is employed to simultaneously use all the at least two multi-protocol RF transceivers.

10. The method claimed in claim 9, wherein communications in accordance with the narrowband communication protocol comprises:
transmitting a wakeup signal (1324) using the narrowband communication protocol in a first part (1326) of the further fixed frame duration (1202, 1322), and
detecting whether a reply signal (1330) is received in accordance with the narrowband communication protocol,
and wherein the method further comprises:
transmitting a further signal (1328) using a fourth communication protocol within a remainder of the further fixed frame duration (1202, 1322) if the reply signal is not received within the first part of the further fixed frame duration (1202, 1322), and
foregoing use of the fourth communication protocol and using the narrowband communication protocol within the remainder of the further fixed frame duration if the reply signal is detected within the first part of the further fixed frame duration (1202, 1322).

11. A reader for engaging in electronic toll collection (ETC) communications and having one or more RF multiprotocol transceivers (802) and at least one processor (37) configured to control operation of the at least one multi-protocol RF transceiver (802), the reader including memory storing processor-executable instructions that, when executed, configure the processor (37) to perform the method claimed in any one of claims 1 to 10.

12. A multi-protocol electronic toll collection (ETC) system for conducting toll transactions in connection with vehicles traveling in a roadway, wherein the vehicles are equipped with either a first transponder configured to operate in accordance with a first communications protocol or a second transponder configured to operate in accordance with a second communications protocol, the system comprising:
a reader (17) including one or more RF multiprotocol transceivers (802) and a processor (37) configured to control operation of the at least one multi-protocol RF transceiver (802);
one or more antennas (18), each antenna (18) being connected to a respective one of the one or more transceivers (802), wherein each antenna (18) is positioned to define a respective capture zone within the roadway;
wherein the system is configured to operate using a fixed frame duration (1302),
and wherein the processor (37) is configured to cause the transceivers (802) to
transmit a signal (1304) from the first transceiver over its respective antenna using the first communication protocol within a first portion (1306) of the fixed frame duration (1302),
detect whether a response signal (1312) conforming to the first communication protocol is received by the first transceiver,
if the response signal is not received within the first portion (1306) of the fixed frame duration, then transmit a second signal (1308) from the first transceiver over its respective antenna using a second communication protocol within the remainder of the fixed frame duration (1302), and
if the response signal is received within the first portion (1306) of the fixed frame duration (1302), forego use of the second communication protocol and conduct communication using the first communications protocol within the remainder of the fixed frame duration (1302),
wherein the first communication protocol has a first communication duration for communicating with transponders, wherein the second communication protocol has a second communication duration for communicating with transponders, and wherein the fixed frame duration (1002) is longer than the first communication duration, longer than the second communication duration, and shorter than the combined lengths of the first and second communication durations.

## Patentansprüche

1. Verfahren zum Auswählen eines Kommunikationsprotokolls in einem elektronischen Multi-Protokoll-Mauterhebungssystem (800), das System umfassend einen Leser (17) mit zumindest einem Multi-Protokoll-HF-Sendeempfänger (802), wobei der Leser einen Prozessor (37) umfasst, der dazu ausgebildet ist, den Betrieb des zumindest einen Multi-Protokoll-HF-Sendeempfängers zu steuern, wobei jeder Sendeempfänger jeweils an eine entsprechende Antenne (18) angeschlossen ist, die jeweils dazu ausgebildet ist, eine Erfassungszone auf einer Straße zu definieren, und wobei das System eine festgelegte Rahmendauer einsetzt, das Verfahren umfassend:
Senden eines Signals vom ersten Sendeempfänger über seine jeweilige Antenne unter Verwendung eines ersten Kommunikationsprotokolls innerhalb eines ersten Abschnitts (1006) der festgelegten Rahmendauer (1002);
Detektieren, ob ein Antwortsignal (1012) gemäß dem ersten Kommunikationsprotokoll vom ersten Sendeempfänger empfangen wird;
wenn das Antwortsignal (1012) nicht innerhalb des ersten Abschnitts (1006) der festgelegten Rahmendauer (1002) empfangen wird: anschließendes Senden eines zweiten Signals (1008) vom ersten Sendeempfänger über seine jeweilige Antenne unter Verwendung eines zweiten Kommunikationsprotokolls innerhalb des Rests der festgelegten Rahmendauer (1002); und
wenn das Antwortsignal (1002) innerhalb des ersten Abschnitts (1006) der festgelegten Rahmendauer (1002) empfangen wird: Hintanhalten der Verwendung des zweiten Kommunikationsprotokolls und Durchführen der Kommunikation unter Verwendung des ersten Kommunikationsprotokolls innerhalb des Rests der festgelegten Rahmendauer (1002),
wobei das erste Kommunikationsprotokoll eine erste Kommunikationsdauer zum Kommunizieren mit Transpondern hat, wobei das zweite Kommunikationsprotokoll eine zweite Kommunikationsdauer zum Kommunizieren mit Transpondern hat, und wobei die festgelegte Rahmendauer (1002) länger ist als die erste Kommunikationsdauer, länger ist als die zweite Kommunikationsdauer und kürzer ist als die kombinierten Längen der ersten und zweiten Kommunikationsdauern.

2. Verfahren nach Anspruch 1, wobei der Leser (17) zumindest zwei Multi-Protokoll-HF-Sendeempfänger (802) hat.

3. Verfahren nach Anspruch 1 oder 2, wobei das erste Kommunikationsprotokoll ein passives Protokoll ist, und wobei das Senden des Signals vom ersten Sendeempfänger das Senden eines kontinuierlichen Wellensignals umfasst, das während des ersten Abschnitts (1006) moduliert wird.

4. Verfahren nach Anspruch 3, wobei das zweite Kommunikationsprotokoll ein weiteres passives Protokoll mit einer vorgegebenen Kommunikationsdauer ist, das eine Transponderaufweckzeit beinhaltet, und wobei der Rest der festgelegten Rahmendauer kürzer ist als die vorgegebene Kommunikationsdauer.

5. Verfahren nach Anspruch 3, wobei das zweite Kommunikationsprotokoll ein aktives Protokoll ist, und wobei das Senden eines zweiten Signals vom ersten Sendeempfänger (802) über seine entsprechende Antenne (18) unter Verwendung eines zweiten Kommunikationsprotokolls das Stoppen des Sendens des kontinuierlichen Wellensignals während des Rests der festgelegten Rahmendauer (1002) und das Senden eines Triggersignals umfasst.

6. Verfahren nach Anspruch 5, wobei das Senden eines zweiten Signals ferner das Detektieren eines Antwortsignals und das Durchführen einer Transponderprogrammierung unter Verwendung des zweiten Kommunikationsprotokolls innerhalb des Rests der festgelegten Rahmendauer (1002) umfasst.

7. Verfahren nach Anspruch 6, wobei das Durchführen einer Transponderprogrammierung das Senden eines Programmiersignals über die jeweilige Antenne während des Rests der festgelegten Rahmendauer (1002) umfasst.

8. Verfahren nach einem der Ansprüche 2 bis 7, wobei die zumindest zwei Multi-Protokoll-HF-Sendeempfänger (802) einen zweiten Sendeempfänger (802b), einen dritten Sendeempfänger (802c) und einen vierten Sendeempfänger (802d) umfassen, und wobei das genannte Verfahren zyklisch für aufeinanderfolgende festgelegte Rahmendauern (1002) unter reihenfolglicher Verwendung des genannten ersten Sendeempfängers, des genannten zweiten Sendeempfängers, des genannten dritten Sendeempfängers und des genannten vierten Sendeempfängers durchgeführt wird.

9. Verfahren nach Anspruch 8, wobei das Verfahren ferner einmal in jedem Zyklus das gleichzeitige Verwenden aller der zumindest zwei Multi-Protokoll-HF-Sendeempfänger (802) zum Kommunikationsaufbauversuch gemäß einem Schmalbandkommunikationsprotokoll innerhalb einer weiteren festgelegten Rahmendauer (1202, 1322) umfasst, und wobei ein Frequenzmultiplexverfahren eingesetzt wird, um gleichzeitig alle der zumindest zwei Multi-Protokoll-RF-Sendeempfänger zu verwenden.

10. Verfahren nach Anspruch 9, wobei das Kommunizieren gemäß dem Schmalbandkommunikationsprotokoll umfasst:
Senden eines Aufwecksignals (1324) unter Verwendung des Schmalbandkommunikationsprotokoll in einem ersten Abschnitt (1326) der weiteren festgelegten Rahmendauer (1202, 1322), und
Detektieren, ob ein Antwortsignal (1330) gemäß dem Schmalbandkommunikationsprotokoll empfangen wird,
und wobei das Verfahren ferner umfasst:
Senden eines weiteren Signals (1328) unter Verwendung eines vierten Kommunikationsprotokolls innerhalb eines Rests der weiteren festgelegten Rahmendauer (1202, 1322), wenn das Antwortsignal nicht innerhalb des ersten Teils der weiteren festgelegten Rahmendauer (1202, 1322) empfangen wird, und
Hintanhalten der Verwendung des vierten Kommunikationsprotokolls und Verwenden des Schmalbandkommunikationsprotokolls innerhalb des Rests der weiteren festgelegten Rahmendauer, wenn das Antwortsignal innerhalb des ersten Teils der weiteren festgelegten Rahmendauer (1202, 1322) detektiert wird.

11. Leser zum Teilnehmen in Kommunikationen beim elektronischen Mauterheben (ETC), der einen oder mehrere Multi-Protokoll-HF-Sendeempfänger (802) und zumindest einen Prozessor (37) hat, der dazu ausgebildet ist, den Betrieb des zumindest einen Multi-Protokoll-HF-Sendeempfängers (802) zu steuern, wobei der Leser einen Speicher zum Speichern von von einem Prozessor ausführbaren Anweisungen beinhaltet, die, wenn sie ausgeführt werden, den Prozessor (37) dazu veranlassen, das Verfahren nach einem der Ansprüche 1 bis 10 auszuführen.

12. Elektronisches Multi-Protokoll-Mauterhebungssystem (ETC) zum Durchführen von Mauttransaktionen in Verbindung mit Fahrzeugen, die auf einer Straße fahren, wobei die Fahrzeuge entweder mit einem ersten Transponder, der für den Betrieb gemäß einem ersten Kommunikationsprotokoll ausgebildet ist, oder mit einem zweiten Transponder, der für den Betrieb gemäß einem zweiten Kommunikationsprotokoll ausgebildet ist, ausgestattet sind,
das System umfassend:
einen Leser (17) umfassend einen oder mehrere Multi-Protokoll-HF-Sendeempfänger (802) und einen Prozessor (37), der dazu ausgebildet ist, den Betrieb des zumindest einen Multi-Protokoll-HF-Sendeempfängers (802) zu steuern;
eine oder mehrere Antennen (18), wobei jede der Antennen (18) an jeweils einen der einen oder mehreren Sendeempfänger (802) angeschlossen ist, wobei jede Antenne (18) derart positioniert ist, dass sie eine entsprechende Erfassungszone auf der Straße definiert,
wobei das System dazu ausgebildet ist, unter Verwendung einer festgelegten Rahmendauer (1302) betrieben zu werden,
und wobei der Prozessor (37) dazu ausgebildet ist, die Sendeempfänger (802) zu veranlassen:
ein Signal (1304) vom ersten Sendeempfänger über seine jeweilige Antenne unter Verwendung eines ersten Kommunikationsprotokolls innerhalb eines ersten Abschnitts (1306) der festgelegten Rahmendauer (1302) zu senden;
zu detektieren, ob ein Antwortsignal (1312) passend zu dem ersten Kommunikationsprotokoll vom ersten Sendeempfänger empfangen wird;
wenn das Antwortsignal nicht innerhalb des ersten Abschnitts (1306) der festgelegten Rahmendauer empfangen wird: anschließend ein zweites Signal (1308) vom ersten Sendeempfänger über seine jeweilige Antenne unter Verwendung eines zweiten Kommunikationsprotokolls innerhalb des Rests der festgelegten Rahmendauer (1302) zu senden; und
wenn das Antwortsignal innerhalb des ersten Abschnitts (1306) der festgelegten Rahmendauer (1302) empfangen wird: die Verwendung des zweiten Kommunikationsprotokolls hintanzuhalten und die Kommunikation unter Verwendung des ersten Kommunikationsprotokolls innerhalb des Rests der festgelegten Rahmendauer (1302) durchzuführen,
wobei das erste Kommunikationsprotokoll eine erste Kommunikationsdauer zum Kommunizieren mit Transpondern hat, wobei das zweite Kommunikationsprotokoll eine zweite Kommunikationsdauer zum Kommunizieren mit Transpondern hat, und wobei die festgelegte Rahmendauer (1002) länger ist als die erste Kommunikationsdauer, länger ist als die zweite Kommunikationsdauer und kürzer ist als die kombinierten Längen der ersten und zweiten Kommunikationsdauern.

## Revendications

1. Procédé pour la sélection d'un protocole de communication dans un système de collecte de péage électronique (800) multiprotocole, le système incluant un lecteur (17) ayant au moins un émetteur-récepteur RF (802) multiprotocole, dans lequel le lecteur inclut un processeur (37) configuré pour contrôler le fonctionnement du au moins un émetteur-récepteur RF (802) multiprotocole, dans lequel chaque émetteur-récepteur est relié à une antenne respective (18) configurée pour définir une zone de captage de la chaussée, et dans lequel le système emploie une durée de trame fixe, le procédé comprenant :
la transmission d'un signal à partir d'un premier émetteur-récepteur par son antenne respective en utilisant un premier protocole de communication dans une première partie (1006) de la durée de trame fixe (1002) ;
la détection si un signal de réponse (1012) en conformité avec le premier protocole de communication est reçu par le premier émetteur-récepteur ;
si le signal de réponse (1012) n'est pas reçu à l'intérieur de la première partie (1006) de la durée de trame fixe (1002), la transmission d'un second signal (1008) à partir du premier émetteur-récepteur par son antenne respective en utilisant un second protocole de communication pour le reste de la durée de trame fixe (1002) ; et
si le signal de réponse (1012) est reçu au sein de la première partie (1006) de la durée de trame fixe (1002), l'abandon de l'utilisation du second protocole de communication et la gestion de la communication en utilisant le premier protocole de communication dans le reste de la durée de la trame fixe (1002),
dans lequel le premier protocole de communication a une première durée de communication pour communiquer avec des transpondeurs, dans lequel le second protocole de communication a une seconde durée de communication pour communiquer avec des transpondeurs, et dans lequel la durée de trame fixe (1002) est plus grande que la durée de la première communication, plus grande que la durée de la seconde communication, et plus courte que la somme des durées des première et seconde communications.

2. Procédé revendiqué selon la revendication 1, dans lequel le lecteur (17) a au moins deux émetteurs-récepteurs RF multiprotocoles (802).

3. Procédé revendiqué selon la revendication 1 ou la revendication 2, dans lequel le premier protocole de communication est un protocole passif, et dans lequel la transmission du signal à partir du premier émetteur-récepteur comprend la transmission d'un signal à ondes continues modulé au cours de la première partie (1006).

4. Procédé revendiqué selon la revendication 3, dans lequel le second protocole de communication est un autre protocole passif ayant une durée de communication prédéfinie qui inclut un temps du réveil du transpondeur, et dans lequel le reste de la durée de trame fixe est plus court que la durée de la communication prédéfinie.

5. Procédé revendiqué selon la revendication 3, dans lequel le second protocole de communication est un protocole actif, et dans lequel la transmission d'un second signal à partir du premier émetteur-récepteur (802) par son antenne respective (18) en utilisant un second protocole de communication comprend l'arrêt de la transmission du signal à ondes continues au cours du reste de la durée de trame fixe (1002) et la transmission d'un signal de déclenchement.

6. Procédé revendiqué selon la revendication 5, dans lequel la transmission d'un second signal comprend en outre la détection d'un signal de réponse et la réalisation d'une opération de programmation du transpondeur en utilisant le second protocole de communication au sein du reste de la durée de trame fixe (1002).

7. Procédé revendiqué selon la revendication 6, dans lequel la réalisation de l'opération de programmation du transpondeur comprend l'envoi d'un signal de programmation via l'antenne respective au cours du reste de la durée de trame fixe (1002).

8. Procédé revendiqué selon l'une quelconque des revendications 2 à 7, dans lequel les au moins deux émetteurs-récepteurs RF multiprotocoles (802) incluent un second émetteur-récepteur (802b), un troisième émetteur-récepteur (802c) et un quatrième émetteur-récepteur (802d), et dans lequel ledit procédé est réalisé de manière cyclique pour des durées de trame fixe successives (1002) en utilisant chacun parmi ledit premier émetteur-récepteur, ledit second émetteur-récepteur, ledit troisième émetteur-récepteur, et ledit quatrième émetteur-récepteur, à son tour.

9. Procédé revendiqué selon la revendication 8, dans lequel le procédé inclut en outre, une fois par cycle, l'utilisation simultanée des au moins deux émetteurs-récepteurs RF multiprotocoles (802) pour une tentative de communication selon un protocole de communication à bande étroite dans une autre durée de trame fixe (1202, 1322), et dans lequel le multiplexage par répartition de la fréquence est employé pour utiliser simultanément tous les au moins deux émetteurs-récepteurs RF multiprotocoles.

10. Procédé revendiqué selon la revendication 9, dans lequel les communications selon le protocole de communication à bande étroite comprennent :
la transmission d'un signal de réveil (1324) en utilisant le protocole de communication à bande étroite dans la première partie (1326) de l'autre durée de trame fixe (1202, 1322), et
la détection si un signal de réponse (1330) selon le protocole de communication à bande étroite est recu,
et dans lequel le procédé comprend en outre :
la transmission d'un autre signal (1328) en utilisant un quatrième protocole de communication au sein du reste de la durée de trame fixe ultérieure (1202, 1322) si le signal de réponse n'est pas reçu dans la première partie de l'autre durée de trame fixe (1202, 1322), et
l'abandon de l'utilisation du quatrième protocole de communication et l'utilisation du protocole de communication à bande étroite dans le reste de l'autre durée de trame fixe si le signal de réponse est détecté dans la première partie de l'autre durée de trame fixe (1202, 1322).

11. Lecteur pour s'engager dans les communications de la collecte de péage électronique (ETC) et avec un ou plusieurs émetteurs-récepteurs RF multiprotocoles (802) et au moins un processeur (37) configuré pour contrôler l'opération d'au moins un émetteur-récepteur RF multiprotocole (802), le lecteur incluant une mémoire stockant des instructions exécutables par le processeur qui, quand elles sont exécutées, configurent le processeur (37) pour mettre en oeuvre le procédé revendiqué selon l'une quelconque des revendications 1 à 10.

12. Système de collecte de péage électronique (ETC) multiprotocole pour mener les transactions de péage en liaison avec des véhicules circulant sur une chaussée, dans lequel les véhicules sont équipés soit d'un premier transpondeur configuré pour fonctionner selon un premier protocole de communication soit d'un second transpondeur configuré pour fonctionner selon un second protocole de communication, le système comprenant :
un lecteur (17) incluant un ou plusieurs émetteurs-récepteurs RF multiprotocoles (802) et un processeur (37) configuré pour contrôler le fonctionnement de l'au moins un émetteur-récepteur RF multiprotocole (802) ;
une ou plusieurs antennes (18), chaque antenne (18) étant reliée à un émetteur-récepteur respectif parmi le un ou plusieurs émetteurs-récepteurs (802), dans lequel chaque antenne (18) est positionnée pour définir une zone de captage respective de la chaussée ;
dans lequel le système est configuré pour fonctionner en utilisant une durée de trame fixe (1302),
et dans lequel le processeur (37) est configuré pour amener les émetteurs-récepteurs (802) à
transmettre un signal (1304) à partir du premier émetteur-récepteur par son antenne respective en utilisant le premier protocole de communication à l'intérieur de la première partie (1306) de la durée de trame fixe (1302), détecter si un signal de réponse (1312) conforme au premier protocole de communication est reçu par le premier émetteur-récepteur,
si le signal de réponse n'est pas reçu au sein de la première partie (1306) de la durée de trame fixe, transmettre alors un second signal (1308) à partir du premier émetteur-récepteur par son antenne respective en utilisant un second protocole de communication au sein du reste de la durée de trame fixe (1302), et
si le signal de réponse est reçu à l'intérieur de la première partie (1306) de la durée de trame fixe (1302), abandonner l'utilisation du second protocole de communication et gérer la communication en utilisant le premier protocole de communication au sein du reste de la durée de trame fixe (1302),
dans lequel le premier protocole de communication a une première durée de communication pour communiquer avec les transpondeurs, dans lequel le second protocole de communication a une seconde durée de communication pour communiquer avec les transpondeurs, et dans lequel la durée de la trame fixe (1002) est plus grande que la durée de la première communication, plus grande que la durée de la seconde communication, et plus courte que la somme des durées des première et seconde communications.
